# EUROPÄISCHE PATENTSCHRIFT

(11) **EP 0 782 939 B1**
(45) Veröffentlichungstag und Bekanntmachung des Hinweises auf die Patenterteilung: **14.03.2001**
(21) Anmeldenummer: 97100071.6
(22) Anmeldetag: 03.01.1997
(51) Int. Cl.: B60H 1/34

(54) **Luftdüse**
Air nozzle
Buse à air

(30) Priorität: 04.01.1996 DE 19600205
(43) Veröffentlichungstag der Anmeldung: 09.07.1997
(73) Patentinhaber: AURORA Konrad G. Schulz GmbH & Co, 69427 Mudau (DE)
(72) Erfinder: Kern, Alfred, 63936 Schneeberg (DE); Knühl, Wolfgang, 74722 Buchen (DE); Gruner, Roland, 74864 Robern (DE)
(74) Vertreter: Splanemann Reitzner Baronetzky Westendorp Patentanwälte

(56) Entgegenhaltungen:
- WO-A-93/23261
- GB-A- 1 452 270
- US-A- 3 683 787
- US-A- 5 364 303

## Beschreibung

Die Erfindung betrifft eine Luftdüse, gemäß dem Oberbegriff von Anspruch 1 und aus GB-A-14 52 270 bekannt.

Weitere derartige Luftdüsen sind seit langem bekannt, beispielsweise aus der US-A-28 94 441. Bei dieser Lösung sind zwei Lamellenbänke kreuzweise zueinander angeordnet, um die Austrittsrichtung der Luftströmung der Düse in zwei Dimensionen beinflussen zu können. Diese Lösung bedingt jedoch einen vergleichsweise hohen Montageaufwand und zahlreiche einzeln zu fertigenden Teile. Die Betätigung der Lamellen ist vergleichsweise kompliziert und die freiliegenden Betätigungselemente der Lamellen sind verschmutzungsanfällig, so daß die Gefahr besteht, daß sich Staubkörner usw. in den konstruktiv erforderlichen Winkeln und Ecken festsetzen. Daher hat sich diese Lösung nicht durchgesetzt.

Eine robustere Konstruktion, die preisgünstiger zu fertigen ist und in ähnlicher Form vielfach zum Einsatz gelangt, ist beispielsweise aus der DE-A-26 28 663 ersichtlich. Bei dieser Lösung sind die Lamellen selbst auf einer Schwenkwalze quer gelagert. Üblicherweise ist die Schwenkwalze länglich ausgebildet, so daß die Schwenklamellen vergleichsweise kurz sind und eine Vielzahl von Lamellen erforderlich ist. Der Luftwiderstand dieser Lösung ist im Grunde vergleichsweise gering. Jedoch müssen gerade bei schmalen Düsen, die dennoch einen den Erfordernissen entsprechenden Strömungsquerschnitt aufweisen, ziemlich viele Lamellen montiert werden. Zudem wird in manchen Fällen das Vorspringen von Walzenteilen beim Verstellen des Schwenkwinkels als unschön empfunden. Für die Verstellung um die horizontale Achse besteht kein Stellelement, sondern der Walzenkörper selbst wird durch Drücken an einer geeigneten Stelle verstellt. Dies bedingt andererseits, daß eine versehentliche unerwünschte Verstellung durch Anstoßen der Düse erfolgen kann.

Demgegenüber liegt der Erfindung die Aufgabe zugrunde, eine Luftdüse gemäß dem Oberbegriff von Anspruch zu schaffen, die hinsichtlich der Bedienung und Montage weiter verbessert ist, insbesondere auch für Stellen geeignet ist, an denen wenig Platz zur Verfügung steht und zudem einen im Vergleich zu den Abmessungen großen freien Strömungsquerschnitt zur Verfügung stellt.

Diese Aufgabe wird erfindungsgemäß durch Anspruch 1 gelöst. Vorteilhafte Weiterbildungen ergeben sich aus den Unteransprüchen.

Mit den erfindungsgemäßen Maßnahmen läßt sich in überraschend einfacher Weise eine Luftdüse schaffen, die die Vorteile der Walzendüse mit denjenigen der Düse mit kreuzweise angeordneten Lamellenbänken kombiniert. Die an sich aus der US-A-36 83 787 bekannte Lamellenwalze mit schräg stehenden Lamellen ist einfach zu fertigen und läßt sich als Kompaktteil leicht montieren. Sie erlaubt dennoch bei entsprechender Ausrichtung einen vergleichsweisen großen freien Strömungsquerschnitt und eine gute Luftumlenkung in einer Ebene quer zu Ihrer Schwenkachse.

Indem die Achsen der Lamellenbank und der Lamellenwalze zueinander parallel angeordnet sind, ergeben sich gerade bei länglichen Düsen gleichzeitig mehrere Vorteile:

Es müssen vergleichsweise wenige Lamellen montiert werden, die sich dann über die gesamte Breite erstrecken. Die Stellräder können an den Stirnseiten angebracht werden, so daß nicht viel freier Strömungsquerschnitt verloren geht und eine Montage auch bei sehr schmalen Düsen und entsprechend beengten räumlichen Verhältnissen möglich ist. Die erfindungsgemäße Luftdüse bietet ein harmonisches und ästhetisch gelungenes Äußeres ohne vorspringende Teile, wobei es in diesem Zusammenhang besonders günstig ist, wenn die Schwenkachsen der Lamellenbank in unmittelbarer Nähe der Vorderfläche der Luftdüse angeordnet sind.

Durch ein Getriebe zwischen der Lamellenwalze und dem zugehörigen Stellrad kann das Übersetzungsverhältnis in einfacher Weise an die Erfordernisse angepaßt werden. Hierzu ist lediglich die Anpassung der Durchmesser der entsprechenden Getrieberäder, insbesondere Zahnräder oder Zahnradsegmente, in geeigneter Weise erforderlich. Es versteht sich, daß gewünschtenfalls das mit dem Stellrad drehfest verbundene Zahnradsegment des Getriebes mit Endanschlägen in an sich bekannter Weise ausgestattet sein kann, um den Schwenkweg in der gewünschten Weise zu begrenzen.

Alternativ ist es auch möglich, ein kreisrundes Zahnrad zu verwenden, um eine beliebige Verdrehbarkeit der Lamellenwalze in beide Richtungen zu erlauben. Aufgrund der schrägstehenden, in sich ovalen Lamellen der Lamellenwalze wird die Luft in einer betrachteten Stellung der Lamellenwalze beispielsweise nach rechts geleitet. Beim Verschwenken um 90° nimmt der Austrittswinkel der Luft kontinuierlich ab, bis er bei der 90°-Stellung auf 0 zurückgegangen ist, die Lamellenwalze also die Luft gerade ausströmen läßt. Ein Weiterdrehen der Lamellenwalze hat zur Folge, daß die Luftaustrittsrichtung dann in die entgegengesetzte Richtung zunimmt, also beispielsweise nach links, bis zur 180°-Stellung. Beim Weiterverdrehen über diese Stellung hinaus nimmt der Luftaustrittswinkel erneut ab, bis er bei der 270°-Stellung erneut 0 beträgt, um sich dann beim Weiterverschwenken sich wieder der Ausgangsstellung anzunähern.

Besonders günstig ist es, daß die erfindungsgemäße Luftdüse modular aufgebaut sein kann.

Beispielsweise können die Lamellen der Lamellenbank sämtlich als gleiche Kunststoff-Formteile ausgebildet sein; bei einer vorteilhaften Ausgestaltung wird dann lediglich ein Mitnehmerzapfen für die Mitnahme in einem zugehörigen Stellrad bestehen gelassen, während die der übrigen abgetrennt werden. Entsprechende Raster ausgesetzt, können mit den gleichen Lamellen auch Düsen unterschiedlicher Breite bestückt werden, was die Vorfertigung und Lagerhaltung vereinfacht. Auch ist es möglich, in dem den Düsenkörper bildenden Spritzguß-Formteil Aufnehmungen vorzusehen, die wahlweise den Einsatz einer zusätzlichen Absperrklappe erlauben. Diese kann hinter der Lamellenwalze vorgesehen sein und dann eingesetzt werden, wenn ein über das Abdichten über die vordere Lamellenbank hinausgehendes luftdichtes Abschließen erwünscht ist.

Im übrigen ist es bei einer weiteren vorteilhaften Ausgestaltung vorgesehen, die Lamellen der Lamellenbank so zu lagern, daß sie sich in ihrer maximalen Schließstellung in einer Ebene erstrecken, wobei die Lamellen dann je aneinander anliegen, um so eine Abdichtung zu erzielen. Gewünschtenfalls können sogar entsprechende Kunststofflippen in den Lamellen eingelassen werden, um die Abdichtung zu verbessern, oder die Lamellen aus einem ziemlich weichelastischen Kunststoff gefertigt sein, was der Abdichtung ebenfalls zu gute kommt.

Es versteht sich, daß der Schwenkwinkel der Lamellenbank in weiten Bereichen an die Erfordernisse anpaßbar ist. Beispielsweise kann ein Schwenkwinkel über 90° hinweg erwünscht sein, etwa wenn die Luftströmung von der 0°-Stellung aus betrachtet in beide Richtungen abgelenkt werden soll.

Bei einer ästhetisch besonders gelungenen Ausgestaltung ist es vorgesehen, die Lamellen auf einer vorgewölbten Ebene zu lagern. Hierdurch wird zudem etwas Platz für die Lamellenwalze geschaffen, was der Verminderung der Bautiefe der Luftdüse zugute kommt. Dennoch ist ohne weiteres ein gemeinsames Verschwenken über ein stangenförmig ausgebildetes Schwenkglied möglich, daß dann bevorzugt ebenfalls etwas gewölbt ausgebildet ist.

Weitere Vorteile, Einzelheiten und Merkmale ergeben sich aus der nachfolgenden Beschreibung eines Ausführungsbeispiels der Erfindung anhand der Zeichnung:

Es zeigen:
- Fig. 1: eine schematische, teils aufgebrochene Ansicht einer erfindungsgemäßen Luftdüse in einer Ausführungsform; und
- Fig. 2: eine ebenfalls schematische Seitenansicht der Luftdüse gemäß Fig. 1.

Die Luftdüse 10 weist einen Düsenkörper 12 auf, in dem eine Lamellenwalze 14 mit schräg stehenden Lamellen 16 an einer Schwenkachse 18 gelagert ist. Vor der Lamellenwalze 14 ist ferner eine Lamellenbank 20 mit einzelnen Lamellen 22 gelagert, wobei jede Lamelle an einer Schwenkachse 24 ebenfalls in dem Düsenkörper 12 abgestützt ist. Die Schwenkachsen 24 und 18 erstrecken sich hierbei im wesentlichen parallel zueinander. An ihren Enden sind Stellräder vorgesehen, und zwar ein Stellrad 26 für die Lamellenwalze 14 und ein Stellrad 28 für die Lamellenbank 20.

Das Stellrad 26 ist über ein Getriebe 30 mit der Lamellenwalze 14 verbunden. Das Getriebe 30 weist ein größeres Zahnrad 32 und ein kleineres Zahnrad 34 auf, die miteinander kämmen und deren Durchmesser das Übersetzungsverhältnis zwischen dem Stellrad 26 und der Lamellenweise 14 bestimmt.

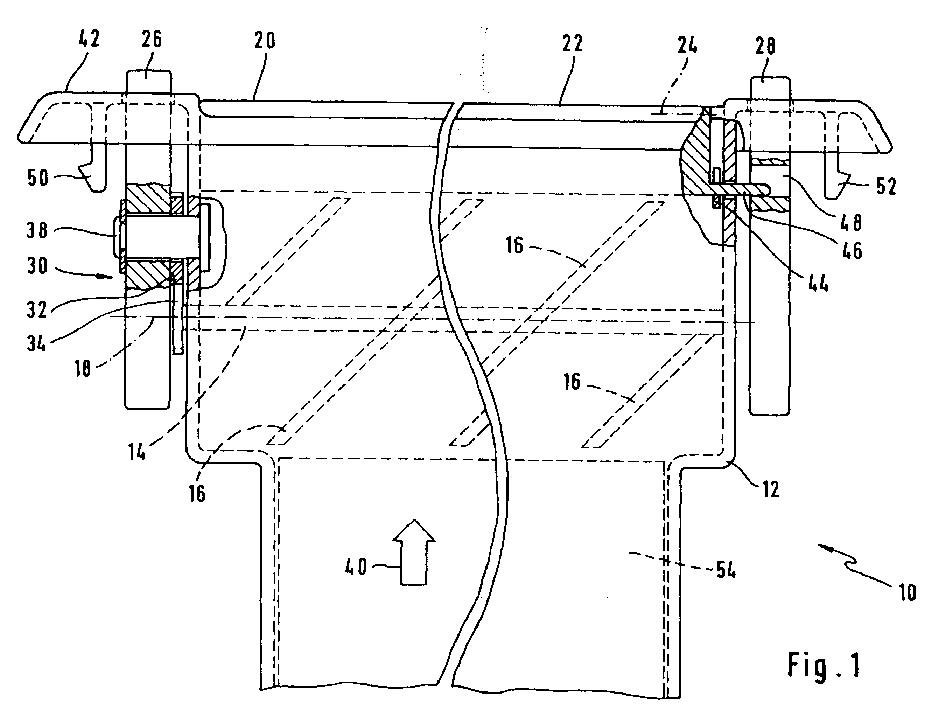

In dem dargestellten Ausführungsbeispiel ist das Übersetzungsverhältnis etwa 3:1, so daß ein Verschwenken des Stellrads 26 um 120° etwa einem Verschwenken der Lamellenwalze 14 um 360° entspricht. Es ist bevorzugt, den Stellweg des Verschwenkens des Stellrads mit 60° vorzusehen, wobei die Mittelstellung des Stellrads 26 dann der Mittelstellung der Lamellen 16 der Lamellenwalze mellenwalze 14 entspricht, in welcher Stellung die Lamellen 16 sich gegenüber der in Fig. 1 dargestellten Stellung um 90° verschwenkt erstrecken und einen freien Luftdurchtritt ermöglichen. In der gegenüber dieser Mittelstellung um 30° verschwenkten Stellung erstrecken sich die Lamellen 16 um 90° verschwenkt, beispielsweise voll nach rechts, wie es in Fig. 1 dargestellt ist, und in der um 30° in die andere Richtung verschwenkten Stellung des Stellrads 26 in der entgegengesetzten Richtung, so daß die Luftströmung 40, die die Luftdüse 10 durchtritt, voll nach links abgelenkt wird.

Es versteht sich, daß die Lagerung des Getriebes 30 sowie der Lamellenwalze 14 und des Stellrads 26 in geeigneter Weise an die Anforderungen angepaßt werden kann. Hierbei ist es bevorzugt, eine flache Bauweise auch für die Zahnräder 32 und 34 zu wählen, um günstige Abstützwinkel zu erhalten, und um die Baubreite möglichst gering zu halten. Die Ausgestaltung gemäß Fig. 1 zeigt in diesem Zusammenhang einen ziemlich breit abgestützten Lagerzapfen 38, wobei das Stellrad 26 kurzerhand mit einem Sprengring und gegebenenfalls einer nicht dargestellten Unterlegscheibe auf dem Lagerzapfen gesichert ist. Das Stellrad 26 - in entsprechender Weise gilt dies auch für das Stellrad 28 - durchtritt eine Vorderfläche 42, des Düsenkörpers 12, die eine Aufnehmung aufweist, die nur knapp größer als das Stellrad 26 ist. Bei dieser Ausgestaltung ist eine einseitige Lagerung des Stellrads 26 ausreichend.

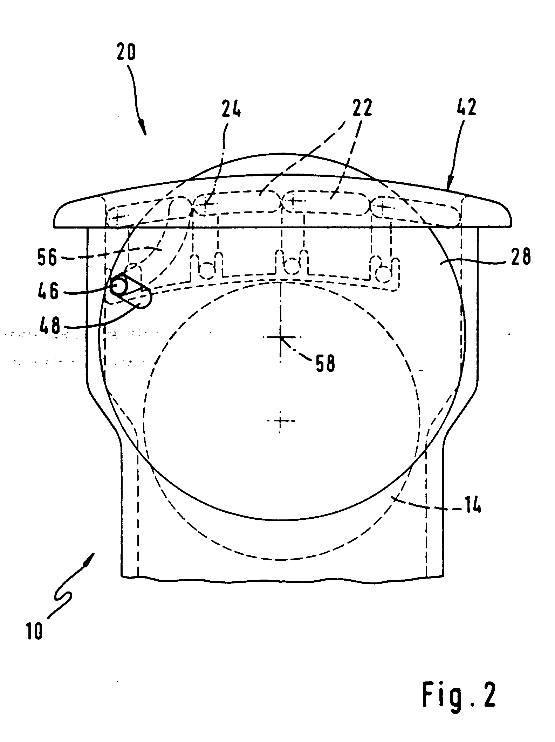

Die Lamellenbank 20 besteht aus gleichen Lamellen 22. Die Lamellen 22 sind an gleichförmig beabstandeten Schwenkachsen 24 gelagert und werden zusammen über ein Schwenkglied 44 mitgenommen, das an Mitnehmerzapfen 46 schwenkbeweglich gelagert ist, wie es an sich bekannt ist. Einer der Mitnehmerzapfen 46 durchtritt sowohl die Wand des Düsenkörpers 12 als auch mindestens teilweise das Stellrad 28 und wird dort in einer entsprechenden Mitnahmeausnehmung 48 geführt. Die Ausgestaltung des Mitnehmerzapfens 46 und der Mitnahmeausnehmung 48 ist aus Fig. 2 besser ersichtlich.

In dem dargestellten Ausführungsbeispiel weist der Düsenkörper 12 von seiner Vorderfläche 42 nach hinten vorspringende Rastzapfen 50 und 52 auf, die dafür gedacht sind, die gesamte Luftdüse 10 an einer entsprechenden Ausnehmung des Karosserieblechs oder des Amaturenbretts einschnappen zu lassen.

Ferner ist es vorgesehen, hinter der Lamellenwalze 14 wahlweise eine Absperrklappe 54 anzuordnen, die über ein geeignetes Stellelement ebenfalls von der Vorderfläche 42 der Luftdüse 10 aus verstellbar sein soll. Diese Absperrklappe soll nur dann montiert werden, wenn sie erwünscht ist, wozu der Düsenkörper entsprechend vorbereitete Lagerausnehmungen aufweist.

Wie aus Fig. 2 ersichtlich ist, erstrecken sich vier Lamellen 22 nebeneinander, und zwar entsprechend einer Wölbung der Vorderfläche 42 des Düsenkörpers 12. Wie ersichtlich ist, erfolgt das Verschwenken der Lamellen 22 über einen Winkel von etwas mehr als 90° mittels der am weitesten links angeordneten Lamelle, die den Mitnehmerzapfen 46 aufweist. Das Stellrad 28 weist die hierzu passende Mitnahmeausnehmung 48 auf, und eine entsprechende Bogenausnehmung 56 ist in der Wand vorgesehen, die eine Bewegung des Mitnehmerzapfens 46 in der gewünschten Weise erlaubt. Aus Fig. 2 ist ebenfalls die Ausgestaltung des Schwenkgliedes 44 besser ersichtlich, das an mindestens zwei Mitnehmerzapfen 46 eingeschnappt ist und Ausnehmungen für die Mitnahme der Mitnehmerzapfen 46 der weiteren Lamellen 22 aufweist.

Es versteht sich, daß andere Ausgestaltungen der erfindungsgemäßen Luftdüse ohne weiteres möglich sind, ohne den Rahmen der Erfindung zu verlassen. Beispielsweise kann es vorgesehen sein, den Schwenkweg des Stellrads 28 zu vergrößern. Hierzu ist es möglich, anstelle des Mitnehmerzapfens 26 der am weitesten links angeordneten Lamelle beispielsweise den der eins weiter rechts angeordneten Lamelle zu wählen, deren Abstand von einer Achse 58 des Stellrads etwas geringer ist, so daß für den gleichen Bewegungsweg der Lamellen ein weiteres Verschwenken des Stellrads erforderlich ist.

Es versteht sich, daß dann die entsprechenden Mitnahmeausnehmungen 48 und 56 an die Erfordernisse angepaßt werden können. Auch können die Lamellen 24 bei entsprechend anderer Lagerung über die 90°-Stellung hinaus verschwenkt werden, wenn dies gewünscht ist. Beispielsweise kann die maximale Schwenkstellung - bezogen auf die in der Zeichnung gemäß Fig. 2 dargestellte Lage - 140° oder bei Bedarf sogar 160° betragen, so daß die Luftströmung in der Darstellung gemäß Fig. 2 auch nach rechts oben verlaufen könnte.

## Patentansprüche

1. Luftdüse, insbesondere für den Einsatz in Fahrzeugen, mit einer Lamellenbank (20) zur Richtungsumlenkung des aus der Luftdüse (10) austretenden Luftstroms, die an einem Düsenkörper (12) gelagert ist und sich im wesentlichen parallel zueinander erstreckende Lamellen (22) hat, und mit einer an dem Düsenkörper (12) gelagerten Lamellenwalze (14), die um eine Schwenkachse (18) mittels eines Walzen-Stellrads (26) verschwenkbar ist und die zur Schwenkachse (18) schrägstehende Lamellen (16) hat,
dadurch gekennzeichnet,
daß die Lamellen (22) der Lamellenbank (20) miteinander schwenkbeweglich um Schwenkachsen (24) herum verschwenkbar sind, wobei sich die Schwenkachse (18) der Lamellenwalze im wesentlichen parallel zu den Schwenkachsen (24) der Lamellen (22) der Lamellenbank (20) erstreckt, und
daß das Walzen-Stellrad (26) über ein untersetzendes Getriebe (30) mit der Lamellenwalze (14) gekoppelt ist.

2. Luftdüse nach Anspruch 1, dadurch gekennzeichnet, daß in dem Düsenkörper (10) an einander gegenüberliegenden Enden Stellräder (26, 28) für das Verschwenken der Lamellenwalze (14) sowie der Lamellenbank (20) gelagert sind.

3. Luftdüse nach einem der vorhergehenden Ansprüche, dadurch gekennzeichnet, daß die Schwenkachsen (24) der Lamellen (22) der Lamellenbank (20) im Bereich der Vorderfläche (42) des Düsenkörpers (12), insbesondere eine vorgewölbte Vorderfläche aufspannend, angeordnet sind.

4. Luftdüse nach einem der vorhergehenden Ansprüche, dadurch gekennzeichnet, daß die Lamellen (22) sich einseitig von ihrer Schwenkachse (24) weg erstrecken.

5. Luftdüse nach einem der vorhergehenden Ansprüche, dadurch gekennzeichnet, daß das Walzen-Stellrad (26) in einer Vorderfläche (42) des Düsenkörpers (12) versenkt gelagert ist und daß das Getriebe (30) eine Untersetzung dergestalt aufweist, daß ein Verschwenken des Walzen-Stellrads (26) um einen in der Vorderfläche (42) des Düsenkörpers (12) freiliegenden Winkel im wesentlichen einer Verschwenkung der Lamellenwalze (14) um 180° entspricht.

6. Luftdüse nach einem der vorhergehenden Ansprüche, dadurch gekennzeichnet, daß ein Stellrad (28) für die Lamellenbank (20) eine Mitnahmeausnehmung (48) aufweist, die an einem von der Schwenkachse (24) einer Lamelle (22) beabstandeten Bereich der Lamelle (22) angebracht ist und die Lamelle (22), deren Schwenkachse (24) von der Schwenkachse des Lamellenbank-Stellrads (28) beabstandet ist, mitnimmt.

7. Luftdüse nach einem der vorhergehenden Ansprüche, dadurch gekennzeichnet, daß die Lamellen (22) der Lamellenbank (20) im wesentlichen gleich ausgebildet sind und eine der Lamellen (22) einen Stellrad-Mitnehmer (46) aufweist.

8. Luftdüse nach einem der vorhergehenden Ansprüche, dadurch gekennzeichnet, daß das Lamellen-Stellrad (28) für die Verschwenkung über den maximalen Schwenkbereich der Lamellen (22) über einen Winkel verschwenkbar ist, der dem Winkel des die Vorderfläche (42) des Düsenkörpers (12) durchtretenden freiliegenden Bereichs des Stellrads (28) im wesentlichen entspricht.

9. Luftdüse nach einem der vorhergehenden Ansprüche, dadurch gekennzeichnet, daß die Lamellen (22) der Lamellenbank (20) über einen Winkel von etwa 90°, insbesondere mindestens teilweise über einen Winkel von etwas mehr als 90° verschwenkbar sind und die Richtung des Luftaustritts in einer Dimension festlegen und die Lamellenwalze (16) in Abhängigkeit von ihrer Schwenkstellung die Richtung des Luftaustritts in einer weiteren Dimension festlegt.

10. Luftdüse nach einem der vorhergehenden Ansprüche, dadurch gekennzeichnet, daß die Lamellen (22) der Lamellenbank (20) über mindestens ein Schwenkglied (44) miteinander im wesentlichen drehfest verbunden sind, das insbesondere entsprechend der Vorwölbung der Lamellen (22), betrachtet in einer Richtung quer zu den Schwenkachsen (24) der Lamellen (22), gewölbt ist.

11. Luftdüse nach einem der vorhergehenden Ansprüche, dadurch gekennzeichnet, daß die Luftdüse (10) eine längliche Form aufweist, wobei sich die Lamellen (22) der Lamellenbank (20) und die Lamellenwalze (14) im wesentlichen in Längsrichtung der Düse (10) erstrecken und die Stellräder (26, 28) an den Schmalseiten der Luftdüse (10) angebracht sind, wobei der freie Strömungsquerschnitt der Lamellenbank (20) ein Längen-/Breitenverhältnis von mehr als 2, insbesondere von etwa 100:40 aufweist.

12. Luftdüse nach einem der vorhergehenden Ansprüche, dadurch gekennzeichnet, daß hinter der Lamellenwalze (14) eine Absperrklappe (54) an dem Düsenkörper (12) gelagert ist, die über ein Betätigungselement an der Vorderfläche (42) des Düsenkörpers (12) betätigbar ist und mit welcher der Luftstrom der Luftdüse (10) regelbar und insbesondere absperrbar ist.

13. Luftdüse nach einem der vorhergehenden Ansprüche, dadurch gekennzeichnet, daß sie modular aufgebaut ist und der Düsenkörper (12) wahlweise mit der Lamellenwalze (16) und/oder einer Absperrklappe (54) bestückbar ist.

14. Luftdüse nach einem der vorhergehenden Ansprüche, dadurch gekennzeichnet, daß die Lamellen (22) der Lamellenbank (20) über einen Winkel von 140° verschwenkbar sind, insbesondere von einer geschlossenen 0°-Gradstellung über eine vollständig offene 90°-Stellung bis zur Endstellung.

15. Luftdüse nach einem der vorhergehenden Ansprüche, dadurch gekennzeichnet, daß die Untersetzung des Getriebes (30) 3:1 beträgt.

16. Luftdüse nach Anspruch 15, dadurch gekennzeichnet, daß das untersetzende Getriebe (30) ein Verschwenken des Walzen-Stellrads (26) von 60° in ein Verschwenken der Lamellen (16) der Lamellenwalze (14) um 180° umsetzt.

17. Luftdüse nach einem der vorhergehenden Ansprüche, dadurch gekennzeichnet, daß das Getriebe (30) ein größeres Zahnrad (32) und ein kleineres Zahnrad (34) aufweist, die miteinander kämmen und deren Durchmesser das Übersetzungsverhältnis zwischen dem Walzen-Stellrad (26) und der Lamellenwalze (14) bestimmt.

## Claims

1. An air nozzle, in particular for use in vehicles, with a set of vanes (20) for adjusting the direction of the air flow emerging from the air nozzle (10), which is mounted on a nozzle body (12) and which has vanes (22) extending substantially parallel to one another, and having a vane roller (14) which is mounted on the nozzle body (12) and which can be pivoted about a pivot axis (18) by means of a roller adjusting wheel (26) and which has vanes (16) inclined relative to the pivot axis (18), characterised in that the vanes (22) of the set of vanes (20) are pivotable together pivotably movable about pivot axes (24), wherein the pivot axis (18) of the vane roller extends substantially parallel to the pivot axes (24) of the lamellae (22) of the set of vanes (20, and in that the roller adjusting wheel (26) is coupled with the vane roller (14) via reduction gearing (30).

2. An air nozzle according to Claim 1, characterised in that adjusting wheels (26,28) for pivoting the vane roller (14) and the set of vanes (20) are mounted in the nozzle body (10) at mutually opposite ends.

3. An air nozzle according to any one of the preceding Claims, characterised in that the pivot axes (24) of the vanes (22) of the set of vanes (20) are disposed in the vicinity of the front face (42) of the nozzle body (12), in particular clamping a convexly curved front face.

4. An air nozzle according to any one of the preceding Claims, characterised in that the vanes (22) extend away from their pivot axis (24) on one side.

5. An air nozzle according to any one of the preceding Claims, characterised in that the roller adjusting wheel (26) is mounted recessed in a front face (42) of the nozzle body (12), and in that the gearing (30) has such a reduction that pivoting of the roller adjusting wheel (26) about an overhung angle in the front face (42) of the nozzle body (12) corresponds substantially to a pivoting of the vane roller (14) through 180°.

6. An air nozzle according to any one of the preceding Claims, characterised in that one adjusting wheel (28) for the set of vanes (20) has an engagement recess (48) which is provided in a region of a vane (22) remote from the pivot axis (24) of the vane (22) and which drives the vane (22), the pivot axis (24) of which is spaced apart from the pivot axis of the adjusting wheel (28) of the set of vanes.

7. An air nozzle according to any one of the preceding Claims, characterised in that the vanes (22) of the set of vanes (20) are substantially the same and one of the vanes (22) has an adjusting-wheel engagement means (46).

8. An air nozzle according to any one of the preceding Claims, characterised in that the vane adjusting wheel (28) for pivoting through the maximum pivot range of the vanes (22) can be pivoted through an angle which essentially corresponds to the angle of the exposed region of the adjusting wheel (28) passing through the front face (42) of the nozzle body (12).

9. An air nozzle according to any one of the preceding Claims, characterised in that the vanes (22) of the set of vanes (20) are pivotable through an angle of approximately 90°, in particular at least partly through an angle of slightly more than 90°, and determine the direction of the air outlet in one dimension and, depending on its pivotal position, the vane roller (16) determines the direction of the air outlet in a further dimension.

10. An air nozzle according to any one of the preceding Claims, characterised in that the vanes (22) of the set of vanes (20) are connected to one another substantially in a manner precluding relative rotation via at least one pivot member (44) which is curved particularly in conformity with the convex curvature of the vanes (22), viewed in a direction transversely to the pivot axes (24) of the vanes (22).

11. An air nozzle according to any one of the preceding Claims, characterised in that the air nozzle (10) is of elongate shape, wherein the vanes (22) of the set of vanes (20) and the vane roller (14) extend substantially in the longitudinal direction of the nozzle (10), and the adjusting wheels (26,28) are mounted on the narrow sides of the air nozzle (10), wherein the free flow cross-section of the set of vanes (20) has length/width ratio of more than 2, in particular of approximately 100:40.

12. An air nozzle according to any one of the preceding Claims, characterised in that behind the vane roller (14) a shut-off flap (54) is mounted on the nozzle body and can be actuated via an actuating member at the front face (42) of the nozzle body (12), by means of which shut-off flap the air flow of the air nozzle (10) can be controlled and, in particular, shut off.

13. An air nozzle according to any one of the preceding Claims, characterised in that it is of modular construction and the nozzle body (12) can be provided optionally with the vane roller (16) [sic] and/or a shut-off flap (54).

14. An air nozzle according to any one of the preceding Claims, characterised in that the vanes (22) of the set of vanes (20) can be pivoted through an angle of 140°, in particular from a closed 0° position through a fully open 90° position into an end position.

15. An air nozzle according to any one of the preceding Claims, characterised in that the reduction ratio of the gearing (30) is 3:1.

16. An air nozzle according to Claim 15, characterised in that the reduction gearing (30) converts a pivoting of the roller adjusting wheel (26) of 60° into a pivoting of the vanes (16) of the vane roller (14) through 180°.

17. An air nozzle according to any one of the preceding Claims, characterised in that the gearing (30) has a larger gearwheel (32) and a smaller gearwheel (34) which mesh with one another and the diameters of which determine the gear ratio between the roller adjusting wheel (26) and the vane roller (14).

## Revendications

1. Buse d'aération, notamment pour une utilisation dans des véhicules automobiles, comprenant un jeu de lamelles (20) servant à faire changer la direction du flux d'air émergeant de la buse d'aération (10), ce jeu de lamelles étant monté sur un corps de buse (12) et présentant des lamelles (22), qui s'étendent de manière sensiblement parallèle entre elles, la buse comportant également un cylindre à lamelles (14), monté sur le corps de buse (12) et propre à pivoter autour d'un axe de pivotement (18) à l'aide d'une molette de réglage de cylindre (26) et comprenant des lamelles (16), qui sont situées obliquement par rapport à l'axe de pivotement (18), caractérisée en ce que les lamelles (22) du jeu de lamelles (20) sont propres à pivoter autour d'axes de pivotement (24) ensemble selon un mouvement pivotant, l'axe de pivotement (18) du cylindre à lamelles s'étendant de manière sensiblement parallèle aux axes de pivotement (24) des lamelles (22) du jeu de lamelles (20), et en ce que la molette de réglage de cylindre (26) est reliée, par l'intermédiaire d'un engrenage réducteur (30), au cylindre à lamelles (14).

2. Buse d'aération selon la revendication 1, caractérisée en ce que des molettes de réglage (26, 28) sont montées dans le corps de buse (10), au niveau d'extrémités opposées, pour le pivotement du cylindre à lamelles (14) ainsi que pour celui du jeu de lamelles (20).

3. Buse d'aération selon l'une des revendications précédentes, caractérisée en ce que les axes de pivotement (24) des lamelles (22) du jeu de lamelles (20) sont disposés dans la zone de la face avant (42) du corps de buse (12), offrant notamment une face avant prébombée.

4. Buse d'aération selon l'une des revendications précédentes, caractérisée en ce que les lamelles (22) s'étendent, d'un côté, dans la direction opposée à leur axe de pivotement (24).

5. Buse d'aération selon l'une des revendications précédentes, caractérisée en ce que la molette de réglage de cylindre (26) est montée de façon encastrée dans une face avant (42) du corps de buse (12), et en ce que l'engrenage (30) présente une réduction telle qu'un pivotement de la molette de réglage de cylindre (26) de la valeur d'un angle libre de rotation dans la face avant (42) du corps de buse (12) corresponde sensiblement à un pivotement de 180° du cylindre à lamelles (14).

6. Buse d'aération selon l'une des revendications précédentes, caractérisée en ce qu'une molette de réglage (28) pour le jeu de lamelles (20) présente un évidement d'entraînement (48), qui est placé au niveau d'une zone d'une lamelle (22), distante de l'axe de pivotement (24) de la lamelle (22), et en ce qu'elle entraîne la lamelle (22), dont l'axe de pivotement (24) est distant de l'axe de pivotement de la molette de réglage (28) du jeu de lamelles.

7. Buse d'aération selon l'une des revendications précédentes, caractérisée en ce que les lamelles (22) du jeu de lamelles (20) sont réalisées de manière sensiblement identique, et en ce que l'une des lamelles (22) présente un toc d'entraînement (46) de molette de réglage.

8. Buse d'aération selon l'une des revendications précédentes, caractérisée en ce que la molette de réglage de lamelles (28) peut, pour le pivotement sur la zone de pivotement maximal des lamelles (22), être amenée à pivoter sur un angle qui correspond sensiblement à l'angle de la zone dégagée, traversant la face avant (42) du corps de buse (12), de la molette de réglage (28).

9. Buse d'aération selon l'une des revendications précédentes, caractérisée en ce que les lamelles (22) du jeu de lamelles (20) peuvent être amenées à pivoter sur un angle d'environ 90°, notamment du moins en partie sur un angle légèrement supérieur à 90°, et en ce qu'elles déterminent la direction de la sortie d'air dans une dimension, tandis que le cylindre à lamelles (16) détermine, en fonction de sa position de pivotement, la direction de la sortie d'air dans une autre dimension.

10. Buse d'aération selon l'une des revendications précédentes, caractérisée en ce que les lamelles (22) du jeu de lamelles (20) sont reliées entre elles d'une manière sensiblement solidaire en rotation, par l'intermédiaire d'au moins un organe de pivotement (44), qui est bombé, notamment de manière correspondante au prébombement des lamelles (22), si l'on regarde dans une direction transversale aux axes de pivotement (24) des lamelles (22).

11. Buse d'aération selon l'une des revendications précédentes, caractérisée en ce que la buse d'aération (10) présente une forme oblongue, les lamelles (22) du jeu de lamelles (20) et le cylindre à lamelles (14) s'étendant sensiblement dans le sens longitudinal de la buse (10), tandis que les molettes de réglage (26, 28) sont situées au niveau des petits côtés de la buse d'aération (10), la section libre de passage de flux d'air du jeu de lamelles (20) ayant un rapport de la longueur à la largeur supérieur à 2, notamment d'environ 100 : 40.

12. Buse d'aération selon l'une des revendications précédentes, caractérisée en ce qu'il est prévu, derrière le cylindre à lamelles (14), un clapet d'arrêt (54), qui est monté au niveau du corps de buse (12) et qui peut être actionné par l'intermédiaire d'un élément d'actionnement au niveau de la face avant (42) du corps de buse (12), et à l'aide duquel clapet le flux d'air de la buse d'aération (10) peut être réglé et notamment arrêté.

13. Buse d'aération selon l'une des revendications précédentes, caractérisée en ce qu'elle est conçue de façon modulaire et en ce que le corps de buse (12) peut être équipé, au choix, du cylindre à lamelles (16) et/ou d'un clapet d'arrêt (54).

14. Buse d'aération selon l'une des revendications précédentes, caractérisée en ce que les lamelles (22) du jeu de lamelles (20) peuvent être amenées à pivoter sur un angle de 140°, notamment à partir d'une position fermée de 0°, en passant par une position complètement ouverte de 90°, jusqu'à la position finale.

15. Buse d'aération selon l'une des revendications précédentes, caractérisée en ce que la réduction de l'engrenage (30) est de 3 : 1.

16. Buse d'aération selon la revendication 15, caractérisée en ce que l'engrenage de réduction (30) transforme un pivotement de 60° de la molette de réglage de cylindre (26) en un pivotement de 180° des lamelles (16) du cylindre à lamelles (14).

17. Buse d'aération selon l'une des revendications précédentes, caractérisée en ce que l'engrenage (30) comporte une grande roue dentée (32) et une petite roue dentée (34) qui s'engrènent mutuellement et dont le diamètre détermine le rapport de réduction entre la molette de réglage de cylindre (26) et le cylindre à lamelles (14).
